# EUROPEAN PATENT SPECIFICATION

(11) **EP 3 784 487 B1**
(45) Date of publication and mention of the grant of the patent: **17.06.2026**
(21) Application number: 19724626.7
(22) Date of filing: 19.04.2019
(51) Int. Cl.: B32B 5/02, B32B 5/18, B32B 5/24, B32B 7/12

(54) **A BACKING LAYER FOR INSULATING CONSTRUCTION PANELS INCLUDING ENVIRONMENTALLY SUSTAINABLE MATERIALS AND A METHOD FOR MANUFACTURING THE BACKING LAYER**
TRÄGERSCHICHT FÜR DÄMMBAUPLATTEN MIT UMWELTFREUNDLICHEN MATERIALIEN UND VERFAHREN ZUR HERSTELLUNG DER TRÄGERSCHICHT
COUCHE DE SOUTIEN POUR PANNEAUX DE CONSTRUCTION ISOLANTS COMPRENANT DES MATÉRIAUX ÉCOLOGIQUES ET PROCÉDÉ DE FABRICATION DE LA COUCHE DE SOUTIEN

(30) Priority: 23.04.2018 IT 201800004786
(43) Date of publication of application: 03.03.2021
(73) Proprietor: Elements S.r.l., 31048 San Biagio di Callalta (TV) (IT)
(72) Inventor: FAOTTO, Giovanni, 31048 San Biagio di Callalta, Treviso (IT); FAOTTO, Ugo, 31048 San Biagio di Callalta, Treviso (IT)
(74) Representative: Pennacchio, Salvatore Giovanni
(86) International application number: PCT/IB2019/053268
(87) International publication number: WO 2019/207446

(56) References cited:
- EP-A1- 2 364 841
- EP-A1- 2 650 118
- US-A1- 2013 149 511
- US-A1- 2017 260 694
- US-A1- 2017 368 792

## Description

### TECHNOLOGICAL BACKGROUND OF THE INVENTION

### Field of application

The present invention relates to a flexible support for insulating panels and a multi-layer insulating construction panel, in particular a thermal-insulating panel made of a synthetic foamed material, using such a flexible support on one or both opposite outer faces of the panel.

In particular, the invention is directed to a backing layer for insulating construction panels manufactured using environmentally sustainable materials, i.e. bio-based products, recycled materials from natural sources or from fossil sources.

### Prior art

Multi-layer insulating panels are widely used in building constructions, for example to ensure the thermal insulation of walls, floors and roofs or covers in general.

A known insulating construction panel comprises a thermal-insulating layer, for example made of polyurethane foam, interposed between two backing layers, adapted to coat the thermal-insulating layer on the larger faces thereof (not the outer delimitation or cutting edges).

The backing layers play a dual role: on the one hand they contain the expansion of the polyurethane foam when manufacturing of the panel, on the other hand, they give the formed panel a preset shape and thickness, and contribute to the dimensional stability and mechanical resistance thereof, e.g. flexural, impact, abrasion resistance.

Backing layers made in turn as multi-layer structures are known, having a reinforcing layer made of fibrous material, e.g. glass fiber, coated by a finishing layer of the mineral type. Such a finishing layer is typically made with binding resins of fossil origin and inert fillers, such as carbonates.

Due to the materials of the single reinforcing and finishing layers, and to the overall reduced thickness, the backing layer (before application and integration thereof with the thermal-insulating layer made of polyurethane foam) is flexible, pliable and can be wound into rolls without suffering damage or structural alterations.

The application and attachment of the backing layer to the thermal-insulating layer made of polyurethane take place by adhesion between the reinforcing layer and the polyurethane layer by means of expanding polyurethane, for example.

Such supports for insulating panels with mineral finishing layers, which comprise binders of fossil origin have drawbacks as they require increasing amounts of natural resources, the growing consumption of which causes an increase in the environmental footprint indicator.

Furthermore, the supports for panels including mineral finishing layers can have high emissions of volatile organic compounds or VOCs or harmful compounds, including formaldehyde, for example.
Document US 2017/0368792 A1 describes a backing layer for insulating panels comprising a fibrous reinforcement layer interposed between two coating layers.
Document US 2017/0260694 A1 describes fiber sheets and structures comprising fiber sheets that use biodegradable and/or recyclable products.

### SUMMARY OF THE INVENTION

Therefore, it is an object of the present invention to provide a backing layer for a thermal-insulating panel and a multi-layer thermal-insulating construction panel having such features as to overcome the drawbacks described with reference to the prior art.

In particular, the present invention relates to a backing layer for insulating construction panels made using environmentally sustainable materials. Below, the term environmentally sustainable materials will be used to indicate bio-products or bio-based materials, materials from natural renewable sources, recycled materials from fossil or natural sources, materials with a low level of harmful emissions, and similar materials as an alternative to the raw materials of fossil origin.

In particular, the present invention takes into account the growing interest in the use of raw materials of plant origin, such as sugars, starches, natural oils and biomass from agricultural and plant waste, used as such or as a synthesis base for manufacturing materials which are useful for producing industrial products. In fact, the use of such a biomass ensures benefits for the environment, reducing the environmental footprint indicator.

It is a particular object of the invention to provide a backing layer for a thermal-insulating panel having such features as to reconcile the needs for:
- flexibility and windability of the backing layer before applying it to the insulating panel,
- mechanical resistance,
- dimensional stability,
- fire resistance,
- air permeability,
- suitability for the industrial manufacturing of the insulating panel made of synthetic expanded/extruded material, in particular polyurethane foam,
and it is manufactured, at least in part, using environmentally sustainable materials, for example materials of natural or bio-based origin, or using materials obtained from renewable sources of natural or fossil origin, recycled materials, materials with a low level of emissions and the like.

These and other objects are achieved by a backing layer for an insulating construction panel according to claim 1, as well as by an insulating construction panel according to claims 4 and 5, and by a method of manufacturing a backing layer for an insulating construction panel according to claim 7.
Preferred and advantageous embodiments form the subject of the dependent claims.

### BRIEF DESCRIPTION OF THE DRAWINGS

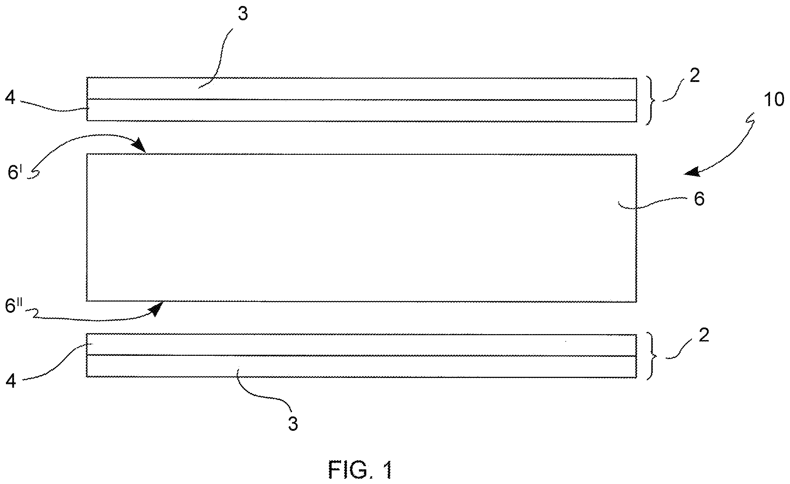

Further features and advantages of the backing layer of an insulating construction panel according to the invention will become apparent from the description of preferred embodiments, given by way of non-limiting example, with reference to **figure 1****,** which is a cross-sectional view of a thermal-insulating construction panel according to an embodiment, where two outer backing layers are depicted separated from (or not yet joined to) an inner insulating layer made of synthetic foamed material.

### DETAILED DESCRIPTION

With reference to figure 1, a multi-layer construction panel having thermal and/or acoustic insulation properties is globally indicated by reference numeral 10.

Advantageously, the insulating panel 10 is usable in the building field for thermally and/or acoustically coating and/or insulating walls, floors and covers.

Such an insulating panel 10 comprises a main layer 6 made of insulating material, advantageously made of polyurethane foam, having a first surface 6' and a second surface 6'' which are opposite to each other (here, the larger surfaces and not the contour surfaces, which highlight the stratification of the panel 10).

By way of advantageous example, the main thermal-insulating layer 6 can be made of polyurethane foam or expanded or extruded polystyrene, or phenolic foam, or fibrous insulating material.

The insulating panel 10 further comprises at least one backing layer 2 connected to the main layer 6 along at least one of or both the first 6' and second 6" surfaces. In other words, the main layer 6 of the panel is coated on at least one side by f the backing layer 2, or interposed between two backing layers 2.

The backing layer 2 comprises a reinforcing layer 4 made of fibrous material and a coating layer 3 of the reinforcing layer 4.

According to one advantageous embodiment of the invention, the fibrous material of the reinforcing layer 4 is at least partially made of environmentally sustainable material, i.e. of bio-based material or material from renewable sources or recycled from natural or fossil sources.

According to embodiments, the fibrous material of the reinforcing layer 4 can be formed from:
- a non-woven fabric, such as consisting of or containing the aforesaid fibrous
   material.

In one embodiment, the reinforcing layer 4 is turned towards and facing and connected to the respective outer surface 6', 6'' of the main layer 6 of the panel 10.

Note that the environmentally sustainable material used for manufacturing at least part of the reinforcing layer 4 is selected from the group consisting of:
- material of natural origin,
- recycled material of synthetic origin,
- material made with polymers obtained from renewable natural sources,
- material of mineral or synthetic origin comprising a bio-based binder.

According to the present invention, the reinforcing layer 4 made of environmentally sustainable fibrous material is a non-woven fabric made of glass fiber, including a binder of plant origin, including starch, for example. In one referred embodiment, the binder is generating an emission of formaldehyde in the indoor air of less than or equal to 0.010 mg/m³.

The aforesaid reinforcing layer 4 can be treated by means of a flame-retardant substance.

The reinforcing layer 4 gives the backing layer 2 and therefore the insulating panel 10 mechanical resistance and/or dimensional stability.

According to the invention, the coating layer 3 of the backing layer 2 is made by applying, to the reinforcing layer 4, a dispersion of one or more environmentally sustainable polymers (dispersed phase) and then drying, in particular at a high temperature.

Such a dispersion of one or more environmentally sustainable polymers also comprises environmentally sustainable inert fillers.

According to an embodiment, said dispersion can be an aqueous dispersion, where the dispersing phase is, in fact, water. Alternatively, the dispersing phase of the dispersion can comprise an organic or inorganic liquid.

To obtain a substantial uniformity of properties and thickness of the backing layer 2, the coating layer 3 is applied to the reinforcing layer 4 so as to cover the whole surface in a substantially uniform manner.

In one embodiment, it is the coating layer 3 of the support 2 to be turned towards and facing and connected to the respective outer surface 6', 6" of the main layer 6 of the panel 10 and not the reinforcing layer 4.

In one embodiment, the coating layer 3 is an applied compound, comprising:
- a polymeric resin, which is partially or completely environmentally sustainable in dispersion,
- environmentally sustainable inert fillers,
optionally water and additives.

In one embodiment, the environmentally sustainable polymeric resin of the coating layer 3 is selected from the group consisting of resins of synthetic origin obtained from renewable materials, such as for example:
- polyethylene obtained by synthesis from ethylene obtained from ethanol after fermentation of sugar cane;
- polymeric dispersions of polymers or copolymers obtained from ingredients of plant origin, including acrylics, styrenics, vinyls, silicones, silanes, polyurethanes, vinyl acetates, vinyl versatates.

In a different embodiment, the environmentally sustainable polymeric resin of the coating layer 3 is selected from the group consisting of resins of plant origin obtained from renewable materials, such as:
- starch and starch mixtures,
- polylactic acid (PLA) derived from sugars,
- cellulose,
- lignin,
- natural rubber,
- polyhydroxyalkanoates (PHA),
- casein and other materials of animal origin.

In one particularly advantageous embodiment, the coating layer 3 of the reinforcing layer 4 is an applied compound comprising:
- from 5% to 30% (percentage by weight) of acrylic resin of plant origin in aqueous dispersion;
- from 40% to 80% (percentages by weight) of environmentally sustainable inert fillers,
- from 0.5% to 5% (percentages by weight) of additives,
- from 10% to 30% (percentages by weight) of water.

The percentages can vary because of the addition of water and additives, such as wetting agents, defoaming agents, dispersing agents, biocides, thickeners, etc.

The manufacturing of the backing layer 2 and the insulating panel 10 by means of a coating layer 3 made of environmentally sustainable material, in particular made by applying a dispersion, for example an aqueous dispersion, of environmentally sustainable polymers to the fibrous reinforcing layer 4 made of environmentally sustainable material, further allows to meet and mutually reconcile the needs for:
- flexibility and windability of the backing layer 2 before applying it to the insulating panel 10,
- mechanical resistance of the backing layer 2 and the insulating panel 10,
- dimensional stability of the backing layer 2 and the insulating panel 10,
- fire resistance of the backing layer 2 and the panel 10,
- air permeability of the backing layer 2,
- suitability for the industrial manufacturing of the insulating panel 10 made of synthetic expanded/extruded material, in particular polyurethane foam.

Note that the coating layer 3 comprises inert fillers selected from the group consisting of inorganic or organic substances in the form of powders, flakes, hollow spheres, rubber powders, plant grits, granules or fibers, carbonates and talcum powders, oxides, hydroxides, sulfates, phosphates.

The fillers are environmentally sustainable and come from renewable sources, as they are obtained from calcium carbonate obtained from eggshells or mollusk shells.

The application and attachment of the backing layer 2 to the main layer 6 of the insulating panel 10 take place, for example, by adhesion between the reinforcing layer 4 (or the coating layer 3) of the backing layer 2 and the main layer 6, for example by means of the same expanding synthetic material, such as polyurethane, as the main layer 6.

According to an exemplary embodiment, a method for manufacturing the backing layer 2 of the invention comprises the steps of:
- arranging the reinforcing layer 4 made of fibrous material, where the fibrous material is at least partially made of environmentally sustainable material;
- making the coating layer 3 by applying a dispersion of one or more environmentally sustainable polymers and environmentally sustainable inert fillers to the reinforcing layer 4, and then drying, preferably at high temperature.

In particular, the step of drying at high temperature can be carried out by positioning the backing layer 2 in, or passing it through, a furnace, e.g. a hot-air furnace, for example at a temperature from 100°C to 250°C.

Furthermore, the method can comprise a step of winding the backing layer 2 to form a roll, which is suitable for transport and/or for use in a system for unwinding the backing layer 2 when manufacturing the insulating panel 10.

According to an embodiment, the manufacturing of the backing layer 2 is carried out continuously by means of a system and method of the roll-to-roll type, where (upstream) the reinforcing layer 4 made of fibrous material is continuously unwound, while (further downstream) simultaneously applying the coating layer 3 to the unwound reinforcing layer 4, and while (even further downstream) simultaneously drying the applied coating layer 3, and (even further downstream) rewinding the backing layer 2 obtained once the coating layer 3 has been dried.

According to a preferred embodiment, a method for manufacturing the insulating panel 10 comprises the steps of:
- forming the main layer 6 made of synthetic foam material, e.g. polyurethane,
- applying the backing layer 2 to only one of or both the first and second 6', 6'' opposite surfaces of the main layer 6, with the reinforcing layer 4 turned towards the main layer 6. In a different embodiment, the coating layer 3 of the support 2 is turned towards the main layer 6.

The formation of the main layer 6 can comprise a step of spraying and/or extruding and/or spreading a polymeric foam, e.g. polyurethane, onto only a first backing layer 2, and then applying a second backing layer 2 to the main polymeric layer 6 formed after the expansion of the polymeric foam, so that such a main layer 6 of the panel 10 is interposed between the two supports 2.

Alternatively, the formation of the main layer 6 can comprise a step of spraying and/or extruding and/or spreading the polymeric foam, e.g. polyurethane, in a gap between two of the aforesaid backing layers 2 previously made, so that the backing layers 2 form a delimitation for the expansion of the polymeric foam which forms the main insulating layer 6.

According to a further embodiment, the step of applying the backing layer 2 can comprise gluing the backing layer 2 onto only one of or both the opposite first and second surfaces 6', 6" of the main layer 6 already formed (for example already completely expanded and shaped, or made of fibrous insulating material), with the reinforcing layer 4 turned towards the main layer 6.

The backing layer 2 for the insulating panels 10 of the invention has several advantages.

In fact, since the backing layer 2 is made of raw materials at least partially of natural origin, of the bio-based or renewable type, it has a low environmental impact, maintaining low levels of polluting emissions, such as volatile organic compounds or VOCs. Such compounds comprise, inter alia, aliphatic, aromatic and chlorinated hydrocarbons, aldehydes, terpenes, alcohols, esters and ketones.

In particular, by carrying out tests according to standards ISO 16000-3 and ISO 16000-6, the Applicant has verified that, with the backing layer 2 of the invention, the concentration of formaldehyde in the emissions, which is one of the most harmful compounds, is kept at a concentration of less than or equal to 0.010 mg/m³ when using the same support.

Furthermore, if the backing layer 2 of the invention is combined with insulating materials, such as bio-sustainable polyurethanes made with poly-oils from vegetable oils, an overall insulating panel system 10 thus created has a low environmental impact, meeting the current market requirements and the strictest European regulations in terms of safety and respect for the environment.

Each of the individual features described by way of example and combined with other features shall also be understood as described independently and separately, and therefore as also applicable to the other described embodiments for the backing layer 2, for the insulating panel 10 and for the manufacturing method.

These embodiments with features which are separate or combined with features of other embodiments are expressly contemplated herein but not described for brevity.

## Claims

1. A backing layer (2) for an insulating construction panel (1) of the type comprising:
- a main layer (6) made of thermally insulating material comprising a first surface (6') and an opposite second surface (6'');
- at least one backing layer (2) connected to the main layer (6) along at least one of said first and second surfaces (6', 6''),
wherein said backing layer (2) comprises:
- a reinforcing layer (4) made of fibrous material,
- a coating layer (3) of the reinforcing layer, said coating layer (3) is made by applying at least one environmentally sustainable polymer onto the reinforcing layer (4), and then drying,
**characterized in that**
said reinforcing layer (4) is a non-woven glass fiber fabric including a binder of plant origin, and
said coating layer (3) is an applied compound comprising:
- an environmentally sustainable polymeric resin in dispersion,
- environmentally sustainable inert fillers;
wherein said environmentally sustainable polymeric resin of the coating layer (3) is chosen from the group consisting of resins of synthetic origin obtained from renewable materials, such as:
- polyethylene obtained by synthesis from the ethylene obtained from the ethanol after fermentation of the sugar cane;
- copolymers obtained from ingredients of plant origin, including acrylics, styrenics, vinyls, silicones, silanes, polyurethanes, vinyl acetates, vinyl versatates; or
wherein the environmentally sustainable polymeric resin of the coating layer (3) is chosen from the group consisting of resins of plant origin obtained from renewable materials, such as:
- starch and starch mixtures,
- polylactic acid (PLA) derived from sugars,
- cellulose,
- lignin,
- natural rubber,
- polyhydroxyalkanoates (PHA),
- casein; and
said environmentally sustainable inert fillers of the coating layer (3) are obtained from calcium carbonate obtained from egg shells or from mollusk shells.

2. A backing layer (2) according to claim 1, wherein said coating layer (3) is an applied compound comprising:
- from 5% to 30%, by weight, of acrylic resin of plant origin in aqueous dispersion;
- from 40% to 80%, by weight, of environmentally sustainable inert fillers,
- from 0.5% to 5%, by weight, of additives,
- from 10% to 30%, by weight, of water.

3. A backing layer (2) according to claim 1, wherein said binder of plant origin is starch.

4. An insulating construction panel (1), comprising:
- a main layer (6) made of thermally insulating material comprising a first surface (6') and an opposite second surface (6''),
- a backing layer (2) according to any one of the claims 1-3 connected to the main layer (6) along at least one of said first and second surfaces (6', 6''), with the reinforcing layer (4) made of fibrous material facing the main layer (6).

5. An insulating construction panel (1), comprising:
- a main layer (6) made of thermally insulating material comprising a first surface (6') and an opposite second surface (6''),
- a backing layer (2) according to any one of the claims 1-3 connected to the main layer (6) along at least one of said first and second surfaces (6', 6''), with the coating layer (3) of the reinforcing layer facing the main layer (6).

6. An insulating construction panel (1) according to claim 4, wherein the backing layer (2) is fixed to the main layer (6) by gluing the reinforcing layer (4) of the backing layer (2) and the main layer (6) by means of an expanding synthetic material of the main layer (6).

7. A method for manufacturing a backing layer (2) for an insulating construction panel (1) of the type comprising:
- a main layer (6) made of thermally insulating material comprising a first surface (6') and an opposite second surface (6''),
- at least one backing layer (2) connected to the main layer (6) along at least one of said first and second surfaces (6', 6''),
wherein said method comprises the steps of:
- arranging a reinforcing layer (4) made of fibrous material, said reinforcing layer (4) is a non-woven glass fiber fabric including a binder of plant origin;
- making a coating layer (3) by applying a dispersion of at least one environmentally sustainable polymer onto the reinforcing layer (4), and then drying,
said coating layer (3) is an applied compound comprising:
- an environmentally sustainable polymeric resin in dispersion,
- environmentally sustainable inert fillers;
wherein said environmentally sustainable polymeric resin of the coating layer (3) is chosen from the group consisting of resins of synthetic origin obtained from renewable materials, such as:
- polyethylene obtained by synthesis from the ethylene obtained from the ethanol after fermentation of the sugar cane;
- copolymers obtained from ingredients of plant origin, including acrylics, styrenics, vinyls, silicones, silanes, polyurethanes, vinyl acetates, vinyl versatates; or
wherein the environmentally sustainable polymeric resin of the coating layer (3) is chosen from the group consisting of resins of plant origin obtained from renewable materials, such as:
- starch and starch mixtures,
- polylactic acid (PLA) derived from sugars,
- cellulose,
- lignin,
- natural rubber,
- polyhydroxyalkanoates (PHA),
- casein; and
said environmentally sustainable inert fillers of the coating layer (3) are obtained from calcium carbonate obtained from egg shells or from mollusk shells.

8. A manufacturing method according to claim 7, wherein the drying step is carried out by positioning the backing layer (2) in a hot-air furnace, at a temperature from 100°C to 250°C.

## Patentansprüche

1. Trägerschicht (2) für eine Dämmbauplatte (1) des Typs umfassend:
- eine Hauptschicht (6), die aus wärmedämmendem Material hergestellt wird, umfassend eine erste Oberfläche (6') und eine gegenüberliegende zweite Oberfläche (6");
- mindestens eine Trägerschicht (2), die mit der Hauptschicht (6) entlang mindestens einer der ersten und zweiten Oberflächen (6', 6") verbunden ist,
wobei die Trägerschicht (2) umfasst:
- eine Verstärkungsschicht (4), die aus faserigem Material hergestellt wird,
- eine Beschichtungsschicht (3) der Verstärkungsschicht, wobei die Beschichtungsschicht (3) durch Aufbringen mindestens eines umweltfreundlichen Polymers auf die Verstärkungsschicht (4) mit anschließendem Trocknen hergestellt wird,
**dadurch gekennzeichnet, dass**
die Verstärkungsschicht (4) ein Glasfaservlies ist, umfassend ein Bindemittel von pflanzlichem Ursprung, und
die Beschichtungsschicht (3) eine aufgebrachte Zusammensetzung ist, umfassend:
- ein umweltfreundliches Polymerharz in Dispersion,
- umweltfreundliche inerte Füllstoffe;
wobei das umweltfreundliche Polymerharz der Beschichtungsschicht (3) aus der Gruppe bestehend aus Harzen von synthetischem Ursprung ausgewählt wird, die aus erneuerbaren Materialien, wie:
- Polyethylen, das durch Synthese aus Ethylen erhalten wird, das aus Ethanol nach Fermentation von Zuckerrohr erhalten wird;
- Copolymere, die aus Bestandteilen von pflanzlichem Ursprung umfassend Acrylate, Styrolharze, Vinylharze, Silikone, Silane, Polyurethane, Vinylacetate, Vinylversatate erhalten werden; oder
wobei das umweltfreundliche Polymerharz der Beschichtungsschicht (3) aus der Gruppe bestehend aus Harzen von pflanzlichem Ursprung ausgewählt wird, die aus erneuerbaren Materialien, wie:
- Stärke und Stärkemischungen,
- Polymilchsäure (PLA), die aus Zuckern abgeleitet werden,
- Cellulose,
- Lignin,
- Naturkautschuk,
- Polyhydroxyalkanoate (PHA),
- Casein; erhalten werden, und
die umweltfreundlichen inerten Füllstoffe der Beschichtungsschicht (3) aus Calciumcarbonat, das aus Eierschalen oder aus Molluskenschalen gewonnen wird, erhalten werden.

2. Trägerschicht (2) nach Anspruch 1, wobei die Beschichtungsschicht (3) eine aufgebrachte Zusammensetzung ist, umfassend:
- von 5 % bis 30 % in Gewicht von Acrylharz von pflanzlichem Ursprung in wässriger Dispersion;
- von 40 % bis 80 % in Gewicht von umweltfreundlichen inerten Füllstoffen,
- von 0,5 % bis 5 % in Gewicht von Additiven,
- von 10 % bis 30 % in Gewicht von Wasser.

3. Trägerschicht (2) nach Anspruch 1, wobei das Bindemittel von pflanzlichem Ursprung Stärke ist.

4. Dämmbauplatte (1), umfassend:
- eine Hauptschicht (6), die aus wärmedämmendem Material hergestellt wird, umfassend eine erste Oberfläche (6') und eine gegenüberliegende zweite Oberfläche (6");
- eine Trägerschicht (2) nach einem der Ansprüche 1 bis 3, die mit der Hauptschicht (6) entlang mindestens einer der ersten und zweiten Oberflächen (6', 6") verbunden ist, wobei die Verstärkungsschicht (4), aus faserigem Material hergestellt wird, das der Hauptschicht (6) zugewandt ist

5. Dämmbauplatte (1), umfassend:
- eine Hauptschicht (6), die aus wärmedämmendem Material hergestellt wird, umfassend eine erste Oberfläche (6') und eine gegenüberliegende zweite Oberfläche (6");
- eine Trägerschicht (2) nach einem der Ansprüche 1 bis 3, die mit der Hauptschicht (6) entlang mindestens einer der ersten und zweiten Oberflächen (6', 6") verbunden ist, wobei die Beschichtungsschicht (3) der Verstärkungsschicht der Hauptschicht (6) zugewandt ist

6. Dämmbauplatte (1) nach Anspruch 4, wobei die Trägerschicht (2) an der Hauptschicht (6) durch Verkleben der Verstärkungsschicht (4) der Trägerschicht (2) und der Hauptschicht (6) mittels eines expandierenden synthetischen Materials der Hauptschicht (6) befestigt wird.

7. Verfahren zur Herstellung einer Trägerschicht (2) für eine Dämmbauplatte (1) des Typs umfassend:
- eine Hauptschicht (6), die aus wärmedämmendem Material hergestellt wird, umfassend eine erste Oberfläche (6') und eine gegenüberliegende zweite Oberfläche (6");
- mindestens eine Trägerschicht (2), die mit der Hauptschicht (6) entlang mindestens einer der ersten und zweiten Oberflächen (6', 6") verbunden ist,
wobei das Verfahren die folgenden Schritte umfasst:
- Anordnen einer Verstärkungsschicht (4), die aus faserigem Material hergestellt wird, wobei die Verstärkungsschicht (4) ein Glasfaservlies ist, umfassend ein Bindemittel von pflanzlichem Ursprung;
- Herstellen einer Beschichtungsschicht (3) durch Aufbringen einer Dispersion von mindestens einem umweltfreundlichen Polymer auf die Verstärkungsschicht (4) mit anschließendem Trocknen,
wobei die Beschichtungsschicht (3) eine aufgebrachte Zusammensetzung ist, umfassend:
- ein umweltfreundliches Polymerharz in Dispersion,
- umweltfreundliche inerte Füllstoffe;
wobei das umweltfreundliche Polymerharz der Beschichtungsschicht (3) aus der Gruppe bestehend aus Harzen von synthetischem Ursprung ausgewählt wird, die aus erneuerbaren Materialien, wie:
- Polyethylen, das durch Synthese aus Ethylen erhalten wird, das aus Ethanol nach Fermentation von Zuckerrohr erhalten wird;
- Copolymere, die aus Bestandteilen von pflanzlichem Ursprung umfassend Acrylate, Styrolharze, Vinylharze, Silikone, Silane, Polyurethane, Vinylacetate, Vinylversatate erhalten werden; oder
wobei das umweltfreundliche Polymerharz der Beschichtungsschicht (3) aus der Gruppe bestehend aus Harzen von pflanzlichem Ursprung ausgewählt wird, die aus erneuerbaren Materialien, wie:
- Stärke und Stärkemischungen,
- Polymilchsäure (PLA), die aus Zuckern abgeleitet werden,
- Cellulose,
- Lignin,
- Naturkautschuk,
- Polyhydroxyalkanoate (PHA),
- Casein erhalten werden; und
die umweltfreundlichen inerten Füllstoffe der Beschichtungsschicht (3) aus Calciumcarbonat erhalten werden, das aus Eierschalen oder aus Molluskenschalen gewonnen wird.

8. Verfahren nach Anspruch 7, wobei der Trocknungsschritt durchgeführt wird, indem die Trägerschicht (2) in einem Heißluftofen bei einer Temperatur von 100 °C bis 250 °C positioniert wird.

## Revendications

1. Une couche de soutien (2) pour un panneau de construction isolant (1) du type comprenant :
- une couche principale (6) faite de matériau thermiquement isolant comprenant une première surface (6') et une seconde surface opposée (6") ;
- au moins une couche de soutien (2) connectée à la couche principale (6) le long d'au moins l'une desdites première et seconde surfaces (6', 6"),
dans laquelle ladite couche de soutien (2) comprend :
- une couche de renforcement (4) faite de matériau fibreux,
- une couche de revêtement (3) de la couche de renforcement, ladite couche de revêtement (3) est réalisée par application d'au moins un polymère écologiquement durable sur la couche de renforcement (4), puis séchage,
**caractérisée en ce que**
ladite couche de renforcement (4) est un tissu non tissé en fibres de verre comprenant un liant d'origine végétale, et
ladite couche de revêtement (3) est un composé appliqué comprenant : une résine polymérique écologiquement durable en dispersion,
- des charges inertes écologiquement durables ;
dans laquelle ladite résine polymérique écologiquement durable de la couche de revêtement (3) est choisie dans le groupe constitué de résines d'origine synthétique obtenues à partir de matériaux renouvelables, telles que :
- polyéthylène obtenu par synthèse à partir de l'éthylène obtenu à partir de l'éthanol après fermentation de la canne à sucre ;
- copolymères obtenus à partir d'ingrédients d'origine végétale, comprenant des acryliques, des styréniques, des vinyliques, des silicones, des silanes, des polyuréthanes, des acétates de vinyle, des versatates de vinyle ; ou
dans laquelle la résine polymérique écologiquement durable de la couche de revêtement (3) est choisie dans le groupe constitué de résines d'origine végétale obtenues à partir de matériaux renouvelables, telles que :
- amidon et mélanges d'amidon,
- acide polylactique (PLA) dérivé de sucres,
- cellulose,
- lignine,
- caoutchouc naturel,
- polyhydroxyalcanoates (PHA),
- caséine ; et
lesdites charges inertes écologiquement durables de la couche de revêtement (3) sont obtenues à partir de carbonate de calcium obtenu à partir de coquilles d'œufs ou de coquilles de mollusques.

2. Une couche de soutien (2) selon la revendication 1, dans laquelle ladite couche de revêtement (3) est un composé appliqué comprenant :
- de 5 % à 30 %, en poids, de résine acrylique d'origine végétale en dispersion aqueuse ;
- de 40 % à 80 %, en poids, de charges inertes écologiquement durables,
- de 0,5 % à 5 %, en poids, d'additifs,
- de 10 % à 30 %, en poids, d'eau.

3. Une couche de soutien (2) selon la revendication 1, dans laquelle ledit liant d'origine végétale est de l'amidon.

4. Un panneau de construction isolant (1), comprenant :
- une couche principale (6) faite de matériau thermiquement isolant comprenant une première surface (6') et une seconde surface opposée (6"),
- une couche de soutien (2) selon l'une quelconque des revendications 1-3 connectée à la couche principale (6) le long d'au moins l'une desdites première et seconde surfaces (6', 6"), avec la couche de renforcement (4) faite de matériau fibreux tournée vers la couche principale (6).

5. Un panneau de construction isolant (1), comprenant :
- une couche principale (6) faite de matériau thermiquement isolant comprenant une première surface (6') et une seconde surface opposée (6"),
- une couche de soutien (2) selon l'une quelconque des revendications 1-3 connectée à la couche principale (6) le long d'au moins l'une desdites première et seconde surfaces (6', 6"), avec la couche de revêtement (3) de la couche de renforcement tournée vers la couche principale (6)

6. Un panneau de construction isolant (1) selon la revendication 4, dans lequel la couche de soutien (2) est fixée à la couche principale (6) par collage de la couche de renforcement (4) de la couche de soutien (2) et de la couche principale (6) au moyen d'un matériau synthétique expansible de la couche principale (6).

7. Un procédé de fabrication d'une couche de soutien (2) pour un panneau de construction isolant (1) du type comprenant :
- une couche principale (6) faite de matériau thermiquement isolant comprenant une première surface (6') et une seconde surface opposée (6"),
- au moins une couche de soutien (2) connectée à la couche principale (6) le long d'au moins l'une desdites première et seconde surfaces (6', 6"),
dans lequel ledit procédé comprend les étapes de :
- disposer une couche de renforcement (4) faite de matériau fibreux, ladite couche de renforcement (4) est un tissu non tissé en fibres de verre comprenant un liant d'origine végétale ;
- réaliser une couche de revêtement (3) par application d'une dispersion d'au moins un polymère écologiquement durable sur la couche de renforcement (4), puis séchage,
- ladite couche de revêtement (3) est un composé appliqué comprenant : une résine polymérique écologiquement durable en dispersion,
- des charges inertes écologiquement durables ;
dans laquelle ladite résine polymérique écologiquement durable de la couche de revêtement (3) est choisie dans le groupe constitué de résines d'origine synthétique obtenues à partir de matériaux renouvelables, telles que :
- polyéthylène obtenu par synthèse à partir de l'éthylène obtenu à partir de l'éthanol après fermentation de la canne à sucre ;
- copolymères obtenus à partir d'ingrédients d'origine végétale, comprenant des acryliques, des styréniques, des vinyliques, des silicones, des silanes, des polyuréthanes, des acétates de vinyle, des versatates de vinyle ; ou
dans laquelle la résine polymérique écologiquement durable de la couche de revêtement (3) est choisie dans le groupe constitué de résines d'origine végétale obtenues à partir de matériaux renouvelables, telles que :
- amidon et mélanges d'amidon,
- acide polylactique (PLA) dérivé de sucres,
- cellulose,
- lignine,
- caoutchouc naturel,
- polyhydroxyalcanoates (PHA),
- caséine ; et
- lesdites charges inertes écologiquement durables de la couche de revêtement (3) sont obtenues à partir de carbonate de calcium obtenu à partir de coquilles d'œufs ou de coquilles de mollusques.

8. Procédé de fabrication selon la revendication 7, dans lequel l'étape de séchage est effectuée en positionnant la couche de soutien (2) dans un four à air chaud, à une température de 100°C à 250 °C.
